# EUROPEAN PATENT APPLICATION

(11) **EP 4 797 701 A1**
(43) Date of publication of application: **26.08.2026**
(21) Application number: 25305229.4
(22) Date of filing: 20.02.2025
(51) Int. Cl.: H04N 19/70, G06N 3/045, H04N 19/174

(54) **SIGNALING FRAME ENCODING BY NEURAL NETWORK**

(71) Applicant: InterDigital CE Patent Holdings, SAS, 75017 Paris (FR)
(72) Inventor: SCHNITZLER, Francois, 56890 SAINT AVE (FR); GALPIN, Franck, 35235 THORIGNE-FOUILLARD (FR); CHEN, Ya, 35700 RENNES (FR); DAMODARAN, Bharath Bhushan, 56000 VANNES (FR); LAMBERT, Anne, 35250 SAINT-AUBIN-D'AUBIGNE (FR); LE MEUR, Olivier, 35160 TALENSAC (FR)
(74) Representative: Interdigital

(57) **Abstract**

In various implementations, methods and devices are disclosed that process one or more syntax elements for reconstructing at least one part of an picture end-to-end coded using a neural network. The one or more syntax elements comprise at least one of an indication (ph_nn_allowed_flag) enabling end-to-end neural network coding for at least a part of the picture; an indication specifying (ph_only_nn_slice) that all parts of the picture are end-to-end neural network coded; or an indication (sh_nn_flag) enabling end-to-end neural network coding at a given level of the picture, the given level comprises a slice level, a coding tree level, a block level.

## Description

### BACKGROUND

The present application is related to generally relate to image, video and/or 3D scene compression combining data coded with traditional standardized codec and neural network based end-to-end codec. The present embodiments relate to a method and an apparatus for encoding, decoding, transmitting metadata used by a decoder for reconstructing at least one part of a picture end-to-end coded using neural networks.

### BRIEF SUMMARY

In various implementations, methods and devices are disclosed that indicate to a decoder that at least a part of a picture was coded using a neural network-based auto-encoder while other frames or other parts of the picture are coded with a traditional standardized codec.

Briefly stated, in one embodiment a method of video encoding is disclosed that comprises encoding an picture of a video, wherein at least one part of the picture is end-to-end coded using a neural network; encoding one or more syntax elements for reconstructing the at least one part of the picture end-to-end coded using a neural network; and generating a bitstream comprising the coded picture, the one or more syntax elements for reconstructing the at least one part of the picture end-to-end coded using the neural network.

In one embodiment, a method of video decoding or rendering is disclosed that comprises decoding one or more syntax elements for reconstructing at least one part of an picture end-to-end coded using a neural network; reconstructing the picture of a video using the one or more syntax elements, wherein at least one part of the picture is reconstructed using a neural network.

One or more embodiments also provide an apparatus for video encoding, decoding or rendering comprising one or more processors and at least one memory coupled to said one or more processors, wherein said one or more processors are configured to perform the encoding, decoding or rendering method according to any of the embodiments described herein.

One or more embodiments also provide a computer program comprising instructions which when executed by one or more processors cause the one or more processors to perform the encoding, decoding or rendering method according to any of the embodiments described herein. One or more of the present embodiments also provide a computer readable storage medium having stored thereon instructions for encoding, decoding or rendering a video according to the methods described herein.

One or more embodiments also provide a computer readable storage medium having stored thereon video data generated according to the methods described above. One or more embodiments also provide a method and apparatus for transmitting or receiving the video data generated according to the methods described herein.

### BRIEF DESCRIPTION OF THE DRAWINGS

The following detailed description will be better understood when read in conjunction with the appended drawings, in which there are shown examples of one or more of the multiple embodiments of the present disclosure. It should be understood, however, that the embodiments described herein are not limited to the precise arrangements and instrumentalities shown in the drawings. In the drawings:
FIG. 1 is a block diagram illustrating an example system according to one or more embodiments of the present disclosure;
FIG. 2 is a block diagram illustrating an example video encoder according to one or more embodiments of the present disclosure;
FIG. 3 is a block diagram illustrating an example video decoder according to one or more embodiments of the present disclosure;
FIG. 4 is a block diagram illustrating an example end-to-end compression system according to one or more embodiments of the present disclosure;
FIG. 5a and FIG. 5b are block diagrams illustrating an encoding method according to one or more embodiments of the present disclosure; and
FIG. 6a and FIG. 6b are block diagrams illustrating a decoding method according to one or more embodiments of the present disclosure.

### DETAILED DESCRIPTION

In describing the various embodiments of the present disclosure, certain terminology is used herein for convenience only and should not be considered as limiting such embodiments. In the drawings, the same reference numerals are employed for designating the same elements throughout the several figures and the present description.

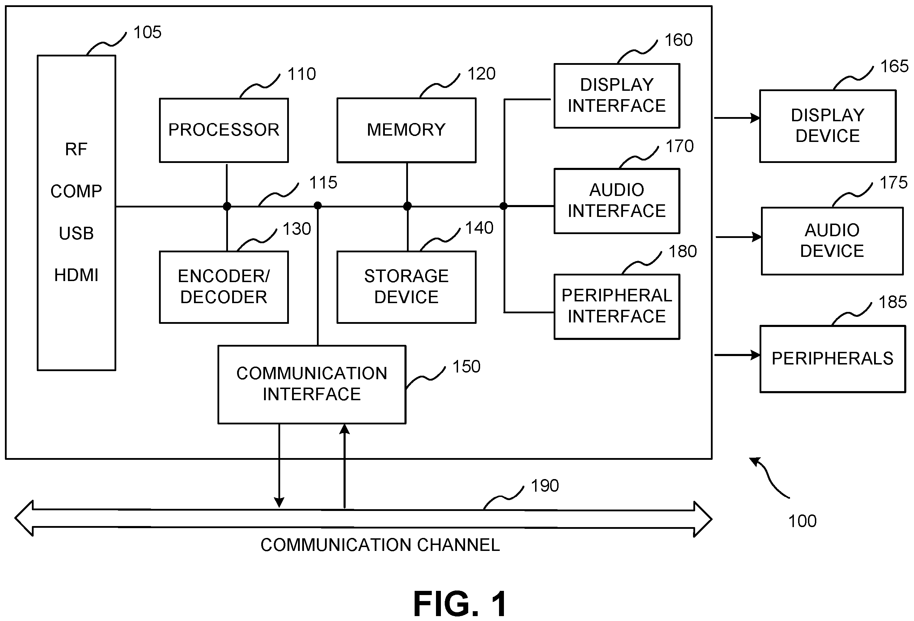

Referring to the drawings, there is shown in FIG. 1 a block diagram illustrating an example system 100 in which embodiments of the present disclosure can be implemented. The system 100 may be an electronic device including, for example, a personal computer, laptop computer, mobile phone, tablet computer, multimedia set-top box, digital television receiver, personal video recording system, connected home appliance, vehicle control and/or entertainment system, and server. One or more elements of the system 100, singly or in combination, may be implemented as an integrated circuit (IC), multiple ICs, and/or discrete components. For example, in one embodiment, the processing, encoding and/or decoding elements of system 100 are distributed across multiple ICs and/or discrete components. In some embodiments, the system 100 is communicatively coupled to and/or in communication with other systems or devices, via, for example, a communications bus or dedicated input/output ports.

One or more of the elements of system 100 may be provided within an integrated housing, with such elements being interconnected and able to transmit data therebetween using any suitable connection arrangement 115 generally known in the art, including, for example, an internal bus (e.g., I2C bus), wiring, and printed circuit boards.

The system 100 includes at least one processor 110 configured to execute instructions for implementing the embodiments described herein, including signal/data coding and processing. The processor 110 may be a general-purpose processor or microprocessor, digital signal processor (DSP), one or more microprocessors in association with a DSP core, a controller, a microcontroller, application specific integrated circuits (ASICs), field programmable gate arrays (FPGAs), a state machine, and the like. The processor 110 may include at least one central processing unit (CPU), embedded memory, input and output interfaces, and other circuitries.

The system 100 includes at least one memory 120, for example, a volatile memory device and/or a non-volatile memory device. The system 100 includes a storage device 140, that may be or include non-volatile memory and/or dynamic volatile memory, including EEPROM, ROM, PROM, RAM, DRAM, SRAM, DDR, flash, magnetic disk drives, solid state drives (SSD) and/or optical disk drives. The storage device 140 may be or include, for example, an internal storage device, an attached storage device, and/or a network accessible storage device. Although shown separately, the memory 120 and the storage device 140 may be collocated, integrated together, or otherwise combined.

The system 100 includes an encoder/decoder module 130 configured to process video data and to provide encoded video data or decoded video data. The encoder/decoder module 130 may include one or more processors and/or memory (not shown). Although FIG. 1 depicts the encoder/decoder module 130 as a separate element of system 100, it will be understood that the processor 110 and the encoder/decoder module 130 may be collocated and/or integrated together as a combination of hardware and/or software, e.g., in an electronic package or chip. The encoder/decoder module 130 may be or include one or more modules that may be included in one or more separate devices that perform encoding and/or decoding functions.

Instructions for execution by the processor 110 and/or the encoder/decoder module 130 may be stored in the storage device 140 and subsequently loaded into memory 120 for execution by the processor 110. In some embodiments, one or more of processor 110, memory 120, storage device 140, and encoder/decoder module 130 may store one or more items when performing the processes disclosed herein. Such items may include input video, decoded video or portions thereof, bitstreams, matrices, variables, operational logic, and intermediate and/or final results from processing of equations, formulas, or operations.

In some embodiments, the memory of the processor 110 and/or the encoder/decoder module 130 is used to store instructions and/or provide working memory for video encoding and decoding functions. In some embodiments, memory external to the processor 110 and/or the encoder/decoder module 130 (e.g., the memory 120 and/or the storage device 140) is used for one or more of these functions and/or, for example, to store the operating system of a television.

The system 100 may obtain or receive information via one or more input devices, interfaces, and/or ports as indicated in input block 105. Examples of the input devices include a radio frequency (RF) device for transmitting and/or receiving RF signals over various media, for example, RF signals received over the air from a broadcaster; component video (COMP) inputs; a Universal Serial Bus (USB) input; and/or a High-Definition Multimedia Interface (HDMI) input. Other examples include composite video input (not shown). In some embodiments, the input devices are associated with respective input processing elements, e.g., those generally known in the art. For example, the RF device may be associated with elements suitable for selecting a desired frequency (e.g., selecting or band-limiting a signal) or performing error correction on the signal. The USB and/or HDMI inputs may include respective interface processors and transceivers (or transmitters and receivers) for coupling the system 100 to other devices via USB and/or HDMI ports or connections. Various forms of input processing may be implemented, for example, by and/or within a separate input processing device or the processor 110.

The system 100 includes a communication interface 150 that enables wired and/or wireless communication with other devices, e.g., via a communication channel 190. The communication interface 150 may include one or more transceivers, modems, network cards and the like. The communication channel 190 may be or include wired and/or wireless mediums.

In some embodiments, data may be streamed to the system 100 via wired and/or wireless networks. Examples of such wireless networks include cellular, Bluetooth or Wi-Fi (e.g., IEEE 802.11) networks. The wired and/or wireless networks may include one or more base stations (e.g., cellular base stations, access points, etc.), and/or user equipment (e.g. cellular user equipment, stations, etc.), and/or other network elements that communicate with the system 100 via the communication interface 150 and communication channel 190, whereby the system 100 may obtain data streamed from streaming applications (e.g., OTT services) via various networks, including the Internet. In some embodiments, data is streamed to the system 100 via the input block 105 (e.g., using a set-top box that delivers data via the HDMI connection or the RF connection). In some embodiments, data is received by the system 100 in a non-streaming manner.

The system 100 may provide one or more output signals to one or more output devices. The output devices may include a display device 165 (e.g., touchscreen display, monitor, etc.), an audio device 175 (e.g., speakers), and other peripheral devices 185, including, for example, a stand-alone DVR, a disk player, a stereo system, a lighting system, and other devices that provide a function based on the output of the system 100. The display device 165 can be for a television, tablet, laptop, mobile phone, head-mounted display, or other device. In some embodiments, control signals are communicated between the system 100 and the display device 165, the audio device 175, and/or the peripheral devices 185, enabling device-to-device control with or without user intervention. The output devices may couple to and/or communicate with the system 100 via dedicated connections via respective display, audio, and peripheral interfaces 160, 170, 180. Alternatively, the output devices may couple to and/or communicate with the system 100 via the communication channel 190 and the communication interface 150.

The display device 165 and the audio device 175 may be collocated, integrated, or otherwise combined with the other components of system 100 in a single unit (e.g., a television). Alternatively, the display device 165 and the audio device 175 may be separate from one or more of the other components of the system 100. In embodiments in which the display device 165 and the audio device 175 are external components, the output signals may be provided via dedicated outputs and/or connections, including, for example, HDMI ports, USB ports, or COMP outputs.

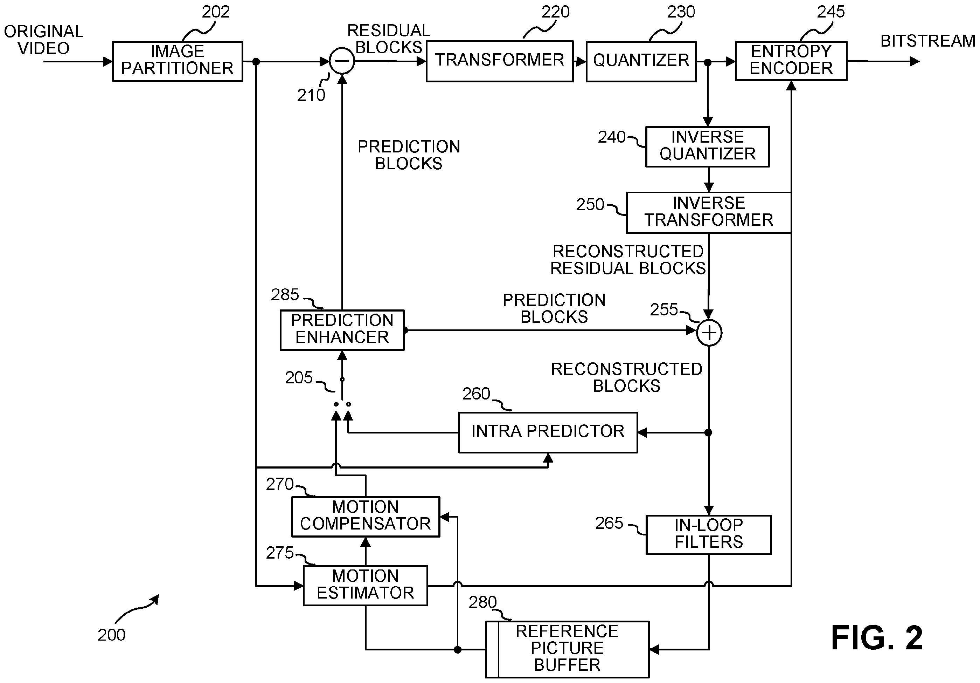

FIG. 2 is a block diagram illustrating an example video encoder 200 that may be employed by the system 100 (e.g., via the encoder/decoder module 130) described with respect to FIG. 1. The video encoder 200 may be an encoder that employs video compression technologies, standards, specification, or protocols, including Advanced Video Coding (AVC, H.264/MPEG-4), High Efficiency Video Coding (HEVC, H.265), Versatile Video Coding (VVC, H.266), Essential Video Coding (EVC, MPEG-5), AOMedia Video 1 (AV1), VP9, or the Enhanced Compression Model (ECM), and variations or improvements thereof. Those skilled in the art will understand that the various embodiments described herein are not limited to a specific standard and can be applied to other standards and recommendations, as well as extensions thereof.

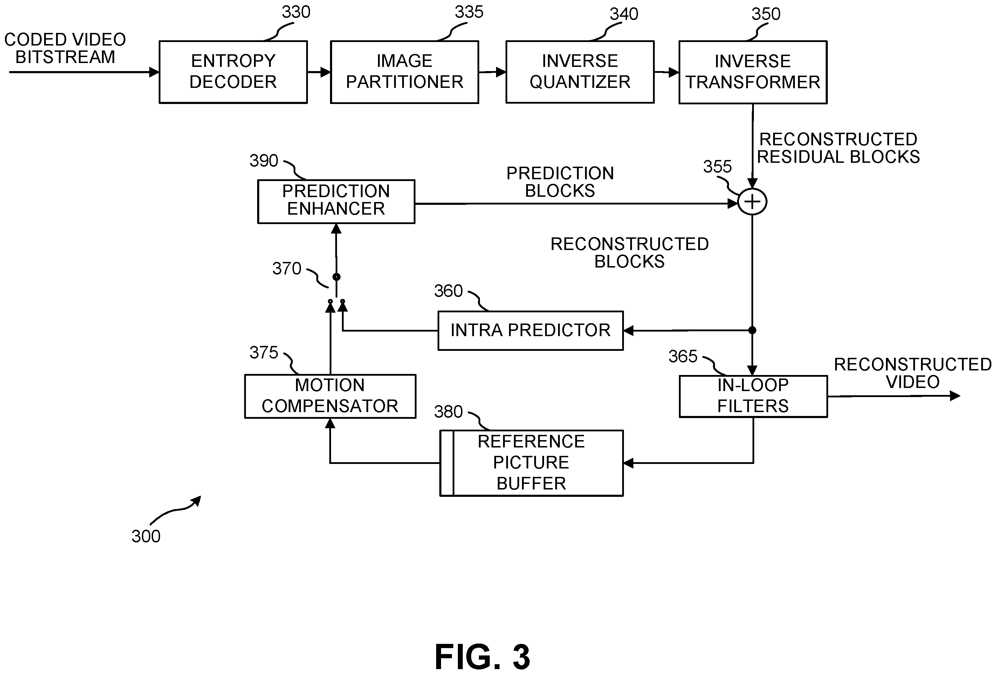

Some embodiments disclosed herein are described with reference to a coding unit (CU) or block of a video frame (or a video image or picture) to which coding tools may be applied by the video encoder 200 and/or by the video decoder 300 (described below with reference to FIG. 3). Generally, embodiments described herein may be applied to a video region formed by a video partition of any shape or size. The video region may be a video slice, a coding tree unit (CTU), or a CU (to which inter prediction or intra prediction can be applied), or a partition thereof, each of which can include samples of a luma component, *Y,* and chroma components, *U* and *V* (also denoted herein by C).

Referring generally to FIG. 2 and the video encoder 200, video data (e.g., one or more video frames) is encoded generally as described below. Prior to encoding, video data may be preprocessed by a precoding processor (not shown). The pre-processing may include, for example, applying a color model transform to the input color components of the input video data (e.g., conversion from RGB 4:4:4 to YUV 4:2:0) or mapping the color components of the input video data to obtain a signal distribution that is more resilient to compression (for instance, applying a histogram equalizer and/or a denoising filter to one or more of the video data's color components). The pre-processing may include associating metadata (for example, a supplemental enhancement information (SEI) message) with the video data that can be attached to a coded video bitstream. After pre-processing, if any, an image (frame) to be encoded is partitioned into CUs (blocks) by an image partitioner 202.

In general, a CU includes a luma block and associated chroma blocks. As such, functions of the video encoder 200 described herein as applied to a CU refer generally to the luma block and the respective chroma blocks. The CUs may be encoded using an intra prediction mode performed by an intra predictor 260. In intra prediction mode, the content of a CU in a frame is predicted based on content from one or more other CUs of the same frame (or region), using reconstructed blocks of other CUs output from an adder 255. The CUs may also or alternatively be encoded using an inter prediction mode, in which motion estimation and motion compensation are performed by a motion estimator 275 and a motion compensator 270, respectively. In inter prediction mode, the content of a CU in a frame is predicted based on content from one or more reconstructed areas of reference frames, available from a reference picture buffer 280.

The video encoder 200 selects or otherwise determines at 205 which prediction mode (intra prediction mode and/or inter prediction mode) to use for encoding a CU. The selected prediction mode may be enhanced (e.g., filtered) by a prediction enhancer 285. Based on the selected mode, a prediction for the CU is generated. A residual block is determined based on the prediction (i.e., prediction block, predicted CU) and the input CU. In some embodiments, such determination is made by a subtractor 210.

The residual block or a partition thereof (e.g., a transform block) is transformed into transform coefficients by a transformer 220. The transform coefficients are quantized by a quantizer 230. An entropy encoder 245 performs entropy encoding of the quantized transform coefficients and coding parameters (e.g., syntax elements including motion vectors and other control data) to form a bitstream of coded video data.

In addition to coding the original video blocks as described herein, the video encoder 200 reconstructs the coded blocks to provide references for future predictions. Thus, quantized transform coefficients (from the quantizer 230) are de-quantized by an inverse quantizer 240, and inverse transformed by an inverse transformer 250, to reconstruct (decode) the residual blocks. The reconstructed residual blocks and prediction blocks are combined (e.g., by the adder 255) to form reconstructed blocks. Thus, the video encoder 200 performs decoding operations through which the encoded images (frames) are reconstructed.

In-loop filters 265 may be applied to the reconstructed image (formed by the reconstructed blocks). The filtered reconstructed image(s) are stored in the reference picture buffer 280 and used by the motion estimator 275 and motion compensator 270, as explained above. The in-loop filters 265 can be applied to the reconstructed samples of an image to reduce distortions introduced by the encoding process. For example, a deblocking filter (DBF), bilateral filter (BIF), sample adaptive offset (SAO), and/or adaptive loop filter (ALF) can be applied to reduce encoding artifacts.

FIG. 3 is a block diagram illustrating an example of video decoder 300 that may be employed by the system 100 (e.g., via the encoder/decoder module 130) described with respect to FIG. 1. Generally, operational features of the video decoder 300 are reciprocal to operational features of the video encoder 200. In the video decoder 300, a coded video bitstream (e.g., generated by the video encoder 200 or another video encoding device or process) is entropy-decoded by an entropy decoder 330 to obtain transform coefficients, motion vectors, and other coding parameters. Based on the coding parameters, an image partitioner 335 divides the picture accordingly. The quantized transform coefficients are de-quantized by an inverse quantizer 340 and inverse transformed by an inverse transformer 350 to decode (reconstruct) respective residual blocks. Depending on the selected prediction mode, a predicted block can be obtained at 370 from an intra predictor 360 (i.e., intra prediction) or from a motion compensator 375 (i.e., inter prediction) and may be enhanced (e.g., filtered) by a prediction enhancer 390, generating a prediction block. The reconstructed residual blocks are combined with prediction blocks (e.g. by an adder 355), resulting in reconstructed blocks.

In-loop filters 365 (e.g., DBF, BIF, SAO, and/or ALF) can be applied to the reconstructed image (formed by the reconstructed blocks), to output reconstructed (decoded) video. The filtered reconstructed image is also stored in a reference picture buffer 380 for reference by the motion compensator 375.

A post-decoding processor (not shown) can process the reconstructed video data. For example, post-decoding processing can include an inverse color model transform (e.g., conversion from YUV 4:2:0 to RGB 4:4:4) or an inverse mapping to reverse the mapping process performed by the pre-encoding processor described with respect to FIG. 2. The post-decoding processor can use metadata derived by the pre-encoding processor and/or signaled in the video bitstream.

Recent additions to video compression technology include various industry standards, versions of reference software and/or documentation such as Enhanced Compression Model (ECM) being developed by the JVET (Joint Video Exploration Team) group. The aim is to make further improvements to the existing VVC (Versatile Video Coding) standard and VSEI specification.

Recent improvements to video compression technology further includes neural network end-to-end compression. End-to-end compression is a compression technique where all components of the processes are learned from given data. End-to-end means that everything is learned from one end (given data) to another end (compressed bitstream). Once the architecture is defined for end-to-end compression, there is no manual engineering work on designing the steps. End-to-end neural compression methods are not standardized yet, although MPEG is currently exploring these technologies.

### Feature(s) associated with auto-encoder are provided herein.

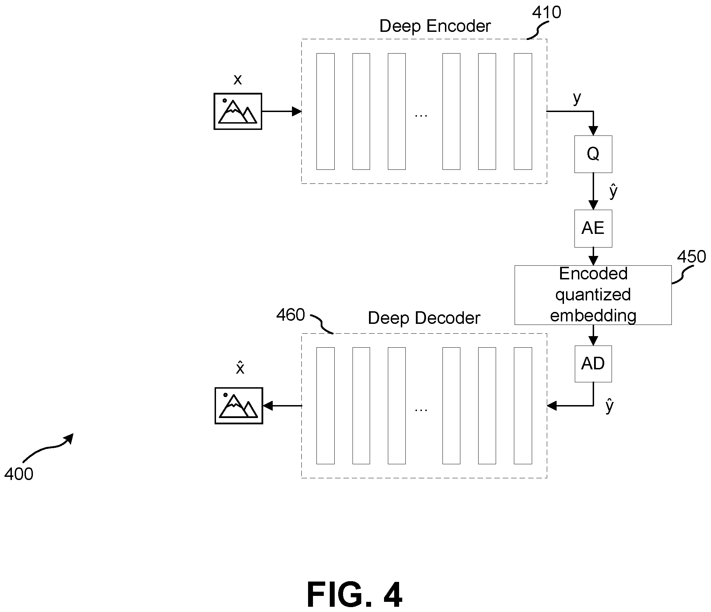

FIG. 4 is a block diagram illustrating an example end-to-end compression system according to one or more embodiments of the present disclosure. An input image to be compressed, *x*, is first processed by a deep encoder 410. The output of the encoder, *y*, is called the embedding of the image. This embedding is converted into a bitstream 450 by going through a quantizer, Q, and then through an arithmetic encoder, AE. The resulting bitstream 450 is decoded by going through an arithmetic decoder, AD, to reconstruct the quantized embedding, *ŷ.* The reconstructed quantized embedding can be processed by a deep decoder 460 to obtain the decompressed image, *x̂.*

The deep encoder 410 and decoder 460 are composed of multiple neural layers, such as convolutional layers. Each neural layer can be described as a function that first multiply the input by a tensor, add a vector called the bias and then apply a nonlinear function on the resulting values. The shape (and other characteristics) of the tensor and the type of non-linear functions are called the architecture of the network. We will denote the values of the tensor and the bias by the term "weights". The weights and, if applicable, the parameters of the non-linear functions, are called the parameters. The architecture and the parameters define a "model". Typically, the encoder and decoder are fixed and supposed to be known at encoding and decoding times. We will denote the layers of the decoder by *l*₁*,* ... *lᵢ,* ... , *lₙ* and its parameters by *θ*.

Many end-to-end architectures have been proposed recently. Typically, they are more complex than FIG. 4, but they all retain the deep encoder and decoder. State of the art models can compete with traditional codecs such as VVC in terms of rate distortion tradeoffs.

A model M must be trained on massive databases D of images to learn the weights of the encoder and decoder. Typically, the weights are optimized to minimize a training loss ${L}_{T} \left(M, D\right) = {E}_{x ∼ D} \left[-log\left({p}_{M}\left(\hat{y}\right)\right)+λd\left(x, \hat{x}\right)\right] ,$ where *p_{M}* denotes the probability of the quantized embedding according to *M* (thus this term is the theoretical lower bound on bitstream size for the encoded quantized embeddings), *d*(., .) denotes a measure of the distortion between the original and the reconstructed image (for example the mean square error) and *λ* denotes a parameter controlling the trade-off between the rate (r) and distortion (d) terms.

Typically, an architecture is trained several times, using different values for *λ*, to yield a set of models {*Mᵢ*} with different r/d trade-offs. Usually, different architectures yield models with different r/d points. To compare these architectures, the r/d points of each architecture are interpolated, resulting in a function d(r) for each architecture that provides a distortion estimate for any rate value.

The deep decoder can decode any type of image. In other words, it performs well on average for all images, but it is likely to be suboptimal for any single image. Recently, it has been shown that it is possible to improve the rate distortion trade-off for a single video by retraining the decoder specifically for this video and by transmitting weight updates *δ* for the decoder in addition to the quantized embeddings for intra frames of the video. Before decoding the quantized embedding, *δ* is added to *θ*. This approach did not achieve rate distortion improvements for single images because of the increased code size due to the inclusion of the weights updates. The loss used for fine tuning can for example be: ${L}_{FT} \left(M, δ, x\right) = - log \left({p}_{Δ}\left(δ\right)\right) + β d \left(x,\hat{x}\left(δ\right)\right) ,$ where *p*_{Δ}(.) denotes a probability density overweight update, *x̂*(*δ*) the image reconstructed by the decoder whose weights have been updated by *δ* and *β* a trade-off between the two losses. In "Overfitting for Fun and Profit: Instance-Adaptive Data Compression" (by T. van Rozendaal, I. A. M. Huijben, and T. S. Cohen, in International Conference on Learning Representations, 2021) an additional term is added to the loss to enforce a global sparsity constraint on *δ*, so that a lot of weight update are the same value (0), to make encoding more efficient.

In this case, decoding the image is a two-step process. The decoder is first updated with the weight updates. Then *ŷ* is decoded by the updated decoder.

### Feature(s) associated with INR are provided herein.

Another neural network-based compression method has recently emerged, called implicit neural representation (INR). At the core of INR approaches is a neural network, the INR network. The INR network is trained to predict a pixel value of an image, *x*(*i,j*), based on the pixel's coordinates (*i,j*) - that is, *f_{θ}*(*i,j*) *=* (*r,g,b*) (or *f_{θ}*(*i,j*) *=* (*y,u,v*))*.* During a training phase of an INR network, the parameters *θ* (or a subset of them) are determined. This is done via an optimization process through which the parameters *θ* that minimize a cost function can be determined. For example, the following cost function can be used: $Cost = D \left(x, {f}_{θ}\right) + λR \left(θ\right)$ where, D is a distortion measure, measuring the fidelity of the estimated pixel values, provided by *f_{θ},* relative to the ground truth, that is, the corresponding pixel values from the original image, denoted by ***x*.** And, where *R* is the resulting bitrate of the encoded parameters *θ*. A trade-off parameter *λ* can be set to determine the balance between *D* and *R*. Note that the distortion measure *D* can be any metric that measure the distance (or similarity) between the original image ***x*** and its estimated version provided by *f_{θ}*, such as a mean squared error metric or a learned perceptual image patch similarity **(LPIPS)** metric. For example, a mean squared error metric can be expressed as: ${D}_{MSE} = \frac{1}{WH} {\sum }_{i ∈ W , j ∈ H} {\left(x\left(i, j\right)-{f}_{θ}\left(i, j\right)\right)}^{2} ,$ where, *W* and *H* are the width and height of the image ***x*** that the INR network is trained to predict. The optimization of the network parameters *θ*, according to equation (3), is typically performed by a machine learning optimization technique, applying, for example, a batch gradient descent algorithm. Following the training of the INR network and using the optimal parameters *θ* (obtained via the optimization process), the INR network can be applied to predict a pixel value based on its corresponding coordinate values.

In INR approaches to compression, the weights of the network are typically quantized, entropy coded and transmitted to the decoder. This is reflected in the rate term of the loss. In some INR approaches, some latent values may be associated to pixel coordinates and used as input of the network. Thus, these latent value may be trained, quantized, entropy coded and transmitted as well.

Recently, it has been proposed to combine neural network-based auto-encoder with traditional codec by allowing the encoder to choose between a traditional codec such as VTM (a codec developed for VVC) or a neural network-based auto encoder to encode each I-frame, also called end-to-end coder or end-to-end neural network in the following. In traditional block-based hybrid video coding standards such as VVC, a standardized syntax allows for signaling the coding tools active in the coded video chunks. Currently, there is no syntax elements allowing to signal the use of a neural network auto-encoder to encode part of the video. Thus, the decoder currently has no way to decode such a bitstream as it has no way to know which decoding method to use and for which part of the video. The skilled in the art will recognize that the concept of intra coded frame is meaningful for traditional codec as the ones designed by JVET. Indeed, the notion of inter frame does not really make sense for neural network auto-encoder as an auto-encoder does not typically start from a previous encoded frame as in meant by inter frame prediction. Therefore, the present principles may be generalized to frames, independently of their type inter, intra, as long as at least a partition of the picture (ie a I-picture, an I-slice, or I-CTU...) may be independently input to a neural network auto-encoder.

Accordingly, the present principles propose a) a bitstream that contains additional information used while encoding all or a part of a frame of a video using an end-to-end codec, including SEI syntax, and b) a decoding method that can cause a decoder using this information to reconstruct the video.

While we focus the description on neural network auto-encoder for clarity, it should be understood that it can be used for other neural network-based approaches such as INR-based methods.

### Feature(s) associated with encoding are provided herein.

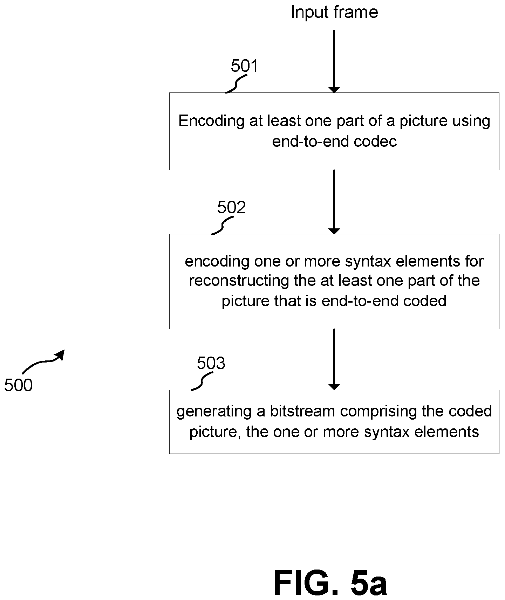

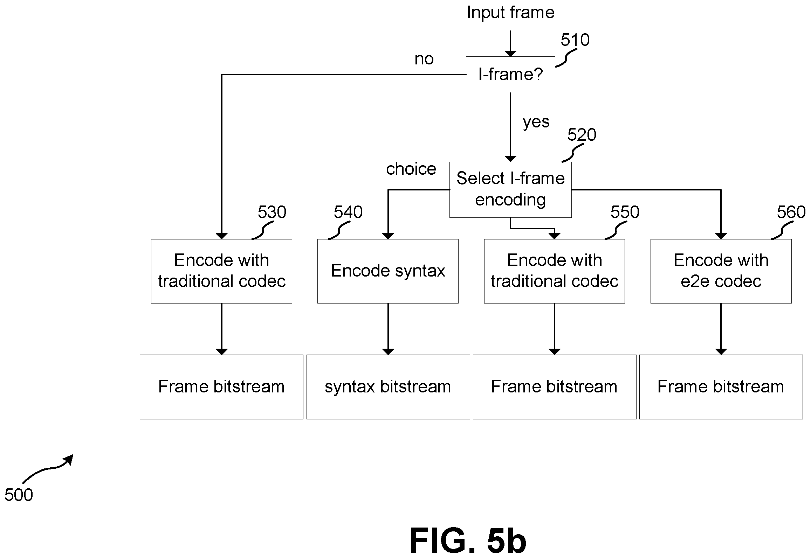

FIG. 5a and FIG. 5b are block diagrams illustrating an encoding method according to one or more embodiments of the present disclosure. FIG. 5a and FIG. 5b may represents a same encoding method 500 from a different perspective, the encoding method 500 is compliant with any of the variants of the syntax proposed hereafter.

For instance, in the embodiment of FIG 5a, frames may be encoded one by one while all or at least a part of a frame of a video may be coded using an end-to-end codec as described above. The encoding 500 combines neural network-based auto-encoder with traditional codec, such as a standardized codec (including encoder and/or decoder), for instance HEVC, or VVC. The method 500 thus takes a current frame or picture to encode as input.

In a step 501, at least one part of the picture is end-to-end coded using a neural network. As shown in FIG. 5b, determining the at least one part of the picture is an encoder choice. Then, in a step 502, one or more syntax elements that allows a decoder to reconstruct the at least one part of the picture end-to-end coded using a neural network are also encoded. Various embodiments of such syntax elements are detailed hereafter. Then, in a step 503, a bitstream is generated that comprises the coded picture, the one or more syntax elements for reconstructing the at least one part of the picture end-to-end coded using the neural network. For instance, an intra coded picture may combine part of the I-picture that is coded by a neural network-based auto-encoder and the remaining part of the I-picture that is coded by a standardized codec. For instance, an inter predicted picture may combine part (I-slice) of the picture that is coded by a neural network-based auto-encoder and the remaining part of the picture that is coded by a standardized codec.

In the embodiment of FIG. 5b, frames may also be encoded one by one. For each input frame, a bitstream is produced as follows. In a first step 510, the frame type (or partition type such as slice type) is checked. For instance, if the frame is not I-frame, the encoder encodes 530 the frame with the traditional codec and may use one or more previously reconstructed frames as reference frame. For instance, a reference frame or at least one part of a reference frame may have been coded using end-to-end neural network. Otherwise, if the current frame to encode is an I-frame, in a step 520, the encoder chooses between traditional codec and at least one end-to-end (e2e) neural network-based codec. As an example among well-known routines in the domain of video compression, the selection step 520 may involve encoding this frame (or part of the frame) using different codecs (e2e codec or traditional codec), evaluating the performance of different codecs on this frame based on different metrics including bitrate, distortion and/or decoding complexity, comparing these performances, and choosing the codec that maximizes one metric or a combination of metrics. In a variant, choosing a method for encoding may be directly based on the characteristics of this frame, for example through an expert designed algorithm or a machine learning model. As an example, one would evaluate all possible codecs in terms of bitrate and distortion and select the value that minimizes the cost associated to the encoding and reconstruction of that part of the signal as a function of the codec for that frame. Upon determining which one or more parts of the I frame are encoded with e2e codec, the encoding method may encode 560 the one or more parts of the I frame with the e2e codec and encode 550 the remaining one or more parts of the I frame using a traditional codec. Besides, in a step 540, information about the choice made by the encoder is encoded into the bitstream using an appropriate syntax. The following section provides a description of examples of such syntax elements. The syntax elements may include indication whether the frame is encoded by the traditional codec or an e2e one. In the latter case, additional information describing the e2e codec may be included in the bitstream as well. Finally, the bitstream is formed by combining at least the syntax elements indicating the codec selected by the encoder for I-frame, the coded video data generated by the codec selected by the encoder in step 530, 550 or 560.

### Feature(s) associated with new syntax description are provided herein.

At least three pieces of information are being made available to the decoder for reconstructing a picture of a video comprising at least one part of an intra picture being end-to-end coded using a neural network. A first element indicates whether an end-to-end codec is used either for a current picture as a whole, or for each of the one or more parts (e.g. slice, tile) of the current picture. A second element indicates which codec is used, and thus how to reconstruct the frame data. Finally, a third element comprises the encoded current frame.

Advantageously, the proposed syntax allows a decoder to process a hybrid bitstream combining traditional and neural network-based coded data, wherein the bitstream is a single-layer bitstream. Besides, some syntax elements allow for enhanced processing at the decoder since some properties (for instance the partitioning of the picture data) of the data issued from neural network-based codec are distinct from the properties of the standard codec data and may raise issue at decoding (for instance on IDR or GDR mechanism).

In a variant embodiment, the elements may be encoded in the picture header for the use of the end-to-end codec at picture level, or in a slice header for the use of the end-to-end codec at slice level. According to another variant, the second element describing e2e used codec may be encoded in a Network Abstraction Layer (NAL) payload. According to yet another variant, the third element comprising encoded frame elements may be embedded in a slice payload.

In some other variants, the use of the codec at the picture level may be further specified. For example, the encoder may choose that the e2e codec is allowed and enabled frame by frame, or used for all I frames.

According to a first embodiment of the syntax elements, the use of the end-to-end codec is defined at the picture level. For instance, the one or more syntax elements for reconstructing at least one part of an Intra picture end-to-end coded using a neural network comprises an indication (**ph_nn_allowed_flag**) enabling end-to-end neural network coding for at least one part of the picture. According to a variant, the one or more syntax elements for reconstructing at least one part of an Intra picture end-to-end coded using a neural network comprises an indication specifying (**ph_only_nn_slice**) that all parts of the picture are end-to-end neural network coded. In that case, some optimization in the signaling may be further implemented. In the first embodiment, the one or more syntax elements may be signaled in a picture header. For instance, the picture header may be modified so that the decoder knows that some parts of the picture may be encoded using a neural codec. A first flag may enable the use of such a codec for part of the picture. A second flag may specify that all parts of the pictures are encoded using a neural codec. This may reduce signaling. An example of the modified picture header syntax structure may be as follows (added syntax is highlighted by italic & underlines in the table):

**Table 1: an example of picture header syntax**

| | |
|---|---|
| picture_header_structure( ) { | **Descriptor** |
| **ph_gdr_or_irap_pic_flag** | u(1) |
| **ph_non_ref_pic_flag** | u(1) |
| if( ph_gdr_or_irap_pic_flag ) | |
| **ph_gdr_pic_flag** | u(1) |
| **ph_inter_slice_allowed_flag** | u(1) |
| if( ph_inter_slice_allowed_flag ) | |
| **ph_intra_slice_allowed_flag** | u(1) |
| *if( ph_intra_slice_allowed_flag )* | |
| ***ph_nn_allowed_flag*** | *u(1)* |
| *if( ! ph_inter_slice_allowed_flag &&**ph_nn_allowed_flag**)* | |
| ***ph_only_nn_slice)*** | *u(1)* |
| **ph_pic_parameter_set_id** | ue(v) |
| **ph_pic_order_cnt_lsb** | u(v) |
| if( ph_gdr_pic_flag ) | |
| **ph_recovery_poc_cnt** | ue(v) |
| for( i = 0; i < NumExtraPhBits; i++ ) | |
| **ph_extra_bit**[ i ] | u(1) |
| if( sps_poc_msb_cycle_flag ) { | |
| **ph_poc_msb_cycle_present_flag** | u(1) |
| if( ph_poc_msb_cycle_present_flag ) | |
| **ph_poc_msb_cycle_val** | u(v) |
| } | |
| if( sps_alf_enabled_flag && pps_alf_info_in_ph_flag ) { | |
| **ph_alf_enabled_flag** | u(1) |
| if( ph_alf_enabled_flag ) { | |
| **ph_num_alf_aps_ids_luma** | u(3) |
| for( i = 0; i < ph_num_alf_aps_ids_luma; i++ ) | |
| **ph_alf_aps_id_luma**[ i ] | u(3) |
| if( sps_chroma_format_idc != 0 ) { | |
| **ph_alf_cb_enabled_flag** | u(1) |
| **ph_alf_cr_enabled_flag** | u(1) |
| } | |
| if( ph_alf_cb_enabled_flag \| \| ph_alf_cr_enabled_flag ) | |
| **ph_alf_aps_id_chroma** | u(3) |
| if( sps_ccalf_enabled_flag ) { | |
| **ph_alf_cc_cb_enabled_flag** | u(1) |
| **i**f( ph_alf_cc_cb_enabled_flag ) | |
| **ph_alf_cc_cb_aps_id** | u(3) |
| **ph_alf_cc_cr_enabled_flag** | u(1) |
| if( ph_alf_cc_cr_enabled_flag ) | |
| **ph_alf_cc_cr_aps_id** | u(3) |
| } | |
| } | |
| } | |
| if( sps_lmcs_enabled_flag *&& ! **ph_only_nn_slice***) { | |
| **ph_lmcs_enabled_flag** | u(1) |
| if( ph_lmcs_enabled_flag ) { | |
| **ph_lmcs_aps_id** | u(2) |
| if( sps_chroma_format_idc != 0 ) | |
| **ph_chroma_residual_scale_flag** | u(1) |
| } | |
| } | |
| if( sps_explicit_scaling_list_enabled_flag *&& ! **ph_only_nn_slice***) *{* | |
| **ph_explicit_scaling_list_enabled_flag** | u(1) |
| if( ph_explicit_scaling_list_enabled_flag ) | |
| **ph_scaling_list_aps_id** | u(3) |
| } | |
| if( sps_virtual_boundaries_enabled_flag && ! sps_virtual_boundaries_present_flag ) { | |
| **ph_virtual_boundaries_present_flag** | u(1) |
| if( ph_virtual_boundaries_present_flag ) { | |
| **ph_num_ver_virtual_boundaries** | ue(v) |
| for( i = 0; i < ph_num_ver_virtual_boundaries; i++ ) | |
| **ph_virtual_boundary_pos_x_minus1**[ i ] | ue(v) |
| **ph_num_hor_virtual_boundaries** | ue(v) |
| for( i = 0; i < ph_num_hor_virtual_boundaries; i++ ) | |
| **ph_virtual_boundary_pos_y_minus1**[ i ] | ue(v) |
| } | |
| } | |
| if( pps_output_flag_present_flag && !ph_non_ref_pic_flag ) | |
| **ph_pic_output_flag** | u(1) |
| if(pps_rpl_info_in_ph_flag ) | |
| ref_pic_lists( ) | |
| if( sps_partition_constraints_override_enabled_flag *&& ! **ph_only_nn_slice***) | |
| **ph_partition_constraints_override_flag** | u(1) |
| if( ph_intra_slice_allowed_flag *&& ! **ph_only_nn_slice***) { | |
| if( ph_partition_constraints_override_flag ) { | |
| **ph_log2_diff_min_qt_min_cb_intra_slice_luma** | ue(v) |
| **ph_max_mtt_hierarchy_depth_intra_slice_luma** | ue(v) |
| if( ph_max_mtt_hierarchy_depth_intra_slice_luma != 0 ) { | |
| **ph_log2_diff_max_bt_min_qt_intra_slice_luma** | ue(v) |
| **ph_log2_diff_max_tt_min_qt_intra_slice_luma** | ue(v) |
| } | |
| if( sps_qtbtt_dual_tree_intra_flag) { | |
| **ph_log2_diff_min_qt_min_cb_intra_slice_chroma** | ue(v) |
| **ph_max_mtt_hierarchy_depth_intra_slice_chroma** | ue(v) |
| if( ph_max_mtt_hierarchy_depth_intra_slice_chroma != 0 ) { | |
| **ph_log2_diff_max_bt_min_qt_intra_slice_chroma** | ue(v) |
| **ph_log2_diff_max_tt_min_qt_intra_slice_chroma** | ue(v) |
| } | |
| } | |
| } | |
| if( pps_cu_qp_delta_enabled_flag ) | |
| **ph_cu_qp_delta_subdiv_intra_slice** | ue(v) |
| if( pps_cu_chroma_qp_offset_list_enabled_flag ) | |
| **ph_cu_chroma_qp_offset_subdiv_intra_slice** | ue(v) |
| } | |
| if( ph_inter_slice_allowed_flag ) { | |
| if( ph_partition_constraints_override_flag ) { | |
| **ph_log2_diff_min_qt_min_cb_inter_slice** | ue(v) |
| **ph_max_mtt_hierarchy_depth_inter_slice** | ue(v) |
| if( ph_max_mtt_hierarchy_depth_inter_slice != 0 ) { | |
| **ph_log2_diff_max_bt_min_qt_inter_slice** | ue(v) |
| **ph_log2_diff_max_tt_min_qt_inter_slice** | ue(v) |
| } | |
| } | |
| if( pps_cu_qp_delta_enabled_flag ) | |
| **ph_cu_qp_delta_subdiv_inter_slice** | ue(v) |
| if( pps_cu_chroma_qp_offset_list_enabled_flag ) | |
| **ph_cu_chroma_qp_offset_subdiv_inter_slice** | ue(v) |
| if( sps_temporal_mvp_enabled_flag ) { | |
| **ph_temporal_mvp_enabled_flag** | u(1) |
| if( ph_temporal_mvp_enabled_flag && pps_rpl_info_in_ph_flag ) { | |
| if( num_ref_entries[ 1 ][ RplsIdx[ 1 ] ] > 0 ) | |
| **ph_collocated_from_l0_flag** | u(1) |
| if( ( ph_collocated_from_l0_flag && | |
| num_ref_entries[ 0 ][ RplsIdx[ 0 ] ] > 1 ) \| \| | |
| ( !ph_collocated_from_l0_flag && | |
| num_ref_entries[ 1 ][ RplsIdx[ 1 ] ] > 1 ) ) | |
| **ph_collocated_ref_idx** | ue(v) |
| } | |
| } | |
| if( sps_mmvd_fullpel_only_enabled_flag ) | |
| **ph_mmvd_fullpel_only_flag** | u(1) |
| presenceFlag = 0 | |
| if( !pps_rpl_info_in_ph_flag ) /* This condition is intentionally not merged into the next, | |
| to avoid possible interpretation of RplsIdx[ i ] not having a specified value. */ | |
| presenceFlag = 1 | |
| else if( num_ref_entries[ 1 ][ RplsIdx[ 1 ] ] > 0 ) | |
| presenceFlag = 1 | |
| if( presenceFlag ) { | |
| **ph_mvd_l1_zero_flag** | u(1) |
| if( sps_bdof_control_present_in_ph_flag ) | |
| **ph_bdof_disabled_flag** | u(1) |
| if( sps_dmvr_control_present_in_ph_flag ) | |
| **ph_dmvr_disabled_flag** | u(1) |
| } | |
| if( sps_prof_control_present_in_ph_flag ) | |
| **ph_prof_disabled_flag** | u(1) |
| if( ( pps_weighted_pred_flag \| \| pps_weighted_bipred_flag ) && | |
| pps_wp_info_in_ph_flag ) | |
| pred_weight_table( ) | |
| } | |
| if( pps_qp_delta_info_in_ph_flag ) | |
| **ph_qp_delta** | se(v) |
| if( sps_joint_cbcr_enabled_flag ) | |
| **ph_joint_cbcr_sign_flag** | u(1) |
| if( sps_sao_enabled_flag && pps_sao_info_in_ph_flag ) { | |
| **ph_sao_luma_enabled_flag** | u(1) |
| if( sps_chroma_format_idc != 0 ) | |
| **ph_sao_chroma_enabled_flag** | u(1) |
| } | |
| if( pps_dbf_info_in_ph_flag ) { | |
| **ph_deblocking_params_present_flag** | u(1) |
| if( ph_deblocking_params_present_flag ) { | |
| if( ! pps_deblocking_filter_disabled_flag ) | |
| **ph_deblocking_filter_disabled_flag** | u(1) |
| if( !ph_deblocking_filter_disabled_flag ) { | |
| **ph_luma_beta_offset_div2** | se(v) |
| **ph_luma_tc_offset_div2** | se(v) |
| if( pps_chroma_ tool offsets_present_flag ) { | |
| **ph_cb_beta_offset_div2** | se(v) |
| **ph_cb_tc_offset_div2** | se(v) |
| **ph_cr_beta_offset_div2** | se(v) |
| **ph_cr_tc_offset_div2** | se(v) |
| } | |
| } | |
| } | |
| } | |
| if( pps_picture_header_extension_present_flag ) { | |
| **ph_extension_length** | ue(v) |
| for( i = 0; i < ph_extension_length; i++) | |
| **ph_extension_data_byte**[ i ] | u(8) |
| } | |
| } | |

The semantic of the modified picture header may be as follows:
**ph_nn_allowed_flag** indicates whether some parts (e.g. some slices, tiles...) of the current picture may be encoded by a neural network based codec. **ph_nn_allowed_flag** equal to 1 specifies that part of the current picture may be encoded using a neural network based method.
**ph_nn_allowed_flag** equal to 0 specifies that the current picture is not encoded using a neural network based method.
**ph_only_nn_slice** indicates whether all slices of the current picture are encoded by a neural network based codec. **ph_only_nn_slice** equal to 1 specifies all slices of the current picture are encoded using a neural network based method. **ph_only_nn_slice** equal to 0 specifies that some slices of the current picture may not be encoded using a neural network based method.

In a variant of the first embodiment, ph_only_nn_slice may not be present.

In another variant of the first embodiment, additional parts of the picture header may be disabled when ph_only_nn_slice is equal to 1 thus indicating that the whole picture is encoded with end-to-end neural network. As non-limiting examples, these elements may include the alf syntax elements, the virtual boundaries syntax elements, the deblocking syntax elements. Examples of conditional disabling of at least one part of the picture header when the flag (ph_only_nn_slice) specifies that all parts of the picture are end-to-end neural network coded are illustrated in table 2 (highlighted by underlined and italic font):

**Table 2: an example of E2E conditional picture header syntax**

| | |
|---|---|
| if( sps_alf_enabled_flag && pps_alf_info_in_ph_flag *&& ! ph_only_nn_slice*) *{* | |
| if( sps_virtual_boundaries_enabled_flag && !sps_virtual_boundaries_present_flag && ! *ph_only_nn_slice*) *{* | |
| if( pps_dbf_info_in_ph_flag *&& ! ph_only_nn_slice*) *{* | |

In another variant of the first embodiment, the syntax elements related to the use of a neural based codec may be signaled in another NAL unit, such as in a slice layer unit, or at the sequence parameter set (SPS) level.

According to a second embodiment of the syntax elements, the use of the end-to-end codec is defined at the slice level. For instance, the one or more syntax elements may comprise an indication enabling end-to-end neural network coding at a given level of the picture, the given level comprises a slice level, a coding tree level, a coding unit or block level (notwithstanding the above-described picture level of the first embodiment). In this embodiment, the use of an end-to-end codec is further signaled at another level, for example in a slice header. This syntax element would allow encoding an I-frame using a traditional codec for some parts of the frame and an end-to-end codec for other parts of the frame. An example of a modified slice header syntax is provided below (added syntax is in italic & underlined):

**Table 3: an example of slice header syntax**

| | |
|---|---|
| slice_header( ) { | **Descriptor** |
| **sh_picture_header_in_slice_header_flag** | u(1) |
| if( sh_picture_header_in_slice_header_flag ) | |
| picture_header_structure( ) | |
| if( sps_subpicinfo_present_flag ) | |
| **sh_subpic_id** | u(v) |
| if( ( pps_rect_slice_flag && NumSlicesInSubpic[ CurrSubpicIdx ] > 1 ) \| \| | |
| ( !pps_rect_slice_flag && NumTilesInPic > 1 ) ) | |
| **sh_slice_address** | u(v) |
| for( i = 0; i < NumExtraShBits; i++ ) | |
| **sh_extra_bit**[ i ] | u(1) |
| if( !pps_rect_slice_flag && NumTilesInPic - sh_slice_address > 1 ) | |
| **sh_num_tiles_in_slice_minus1** | ue(v) |
| if( ph_inter_slice_allowed_flag ) | |
| **sh_slice_type** | ue(v) |
| *if( ph_nn_allowed_flag && ! ph_only_nn_slice && sh_slice_ type = = I)* | |
| ***sh_nn_flag*** | *u(1)* |
| if( nal_unit_type = = IDR_W_RADL \| \| nal_unit_type = = IDR_N_LP \| \| | |
| nal_unit_type = = CRA_NUT \| \| nal_unit_type = = GDR_NUT ) | |
| **sh_no_output_of_prior_pics_flag** | u(1) |
| if( sps_alf_enabled_flag && !pps_alf_info_in_ph_flag ) { | |
| **sh_alf_enabled_flag** | u(1) |
| if( sh_alf_enabled_flag ) { | |
| **sh_num_alf_aps_ids_luma** | u(3) |
| for( i = 0; i < sh_num_alf_aps_ids_luma; i++ ) | |
| **sh_alf aps_id_luma**[ i ] | u(3) |
| if( sps_chroma_format_idc != 0 ) { | |
| **sh_alf_cb_enabled_flag** | u(1) |
| **sh_alf_cr_enabled_flag** | u(1) |
| } | |
| if( sh_alf_cb_enabled_flag \| \| sh_alf_cr_enabled_flag ) | |
| **sh_alf_aps_id_chroma** | u(3) |
| if( sps_ccalf_enabled_flag ) { | |
| **sh_alf_cc_cb_enabled_flag** | u(1) |
| if( sh_alf_cc_cb_enabled_flag ) | |
| **sh_alf_cc_cb_aps_id** | u(3) |
| **sh_alf_cc_cr_enabled_flag** | u(1) |
| if( sh_alf_cc_cr_enabled_flag ) | |
| **sh_alf_cc_cr_aps_id** | u(3) |
| } | |
| } | |
| } | |
| if( ph_lmcs_enabled_flag && ! sh_picture_header_in_slice_header_flag *&&! nn_slice*) | |
| **sh_lmcs_used_flag** | u(1) |
| if( ph_explicit_scaling_list_enabled_flag && !sh_picture_header_in_slice_header_flag *&&! nn_slice*) | |
| **sh_explicit_scaling_list_used_flag** | u(1) |
| if( !pps_rpl_info_in_ph_flag && ( ( nal_unit_type != IDR_W_RADL && | |
| nal_unit_type != IDR_N_LP ) \| \| sps_idr_rpl_present_flag ) ) | |
| ref_pic_lists( ) | |
| if( ( sh_slice_type != I && num_ref_entries[ 0 ][ RplsIdx[ 0 ] ] > 1 ) \| \| | |
| ( sh_slice_type = = B && num_ref_entries[ 1 ][ RplsIdx[ 1 ] ] > 1 ) ) { | |
| **sh_num_ref_idx_active_override_flag** | u(1) |
| if( sh_num_ref_idx_active_override_flag ) | |
| for( i = 0; i < ( sh_slice_type = = B ? 2: 1 ); i++ ) | |
| if( num_ref_entries[ i ][ RplsIdx[ i ] ] > 1 ) | |
| **sh_num_ref_idx_active_minus1**[ i ] | ue(v) |
| } | |
| if( sh_slice_type != I *&&! nn_slice*) *{* | |
| if( pps_cabac_init_present_flag ) | |
| **sh_cabac_init_flag** | u(1) |
| if( ph_temporal_mvp_enabled_flag && !pps_rpl_info_in_ph_flag ) { | |
| if( sh_slice_type = = B ) | |
| **sh_collocated_from_l0_flag** | u(1) |
| if( ( sh_collocated_from_l0_flag && NumRefIdxActive[ 0 ] > 1 ) \| \| | |
| ( ! sh_collocated_ from_l0_flag && NumRefIdxActive[ 1 ] > 1 ) ) | |
| **sh_collocated_ref_idx** | ue(v) |
| } | |
| if( !pps_wp_info_in_ ph_flag && | |
| ( ( pps_weighted_pred_flag && sh_slice_type = = P ) \| \| | |
| ( pps_weighted_bipred_flag && sh_slice_type = = B ) ) ) | |
| pred_weight_table( ) | |
| } | |
| if( !pps_qp_delta_info_in_ph_flag ) | |
| **sh_qp_delta** | se(v) |
| if( pps_slice_chroma_qp_offsets_present_flag ) { | |
| **sh_cb_qp_offset** | se(v) |
| **sh_cr_qp_offset** | se(v) |
| if( sps_joint_cbcr_enabled_flag ) | |
| **sh_joint_cbcr_qp_offset** | se(v) |
| } | |
| if( pps_cu_chroma_qp_offset_list_enabled_flag ) | |
| **sh_cu_chroma_qp_offset_enabled_flag** | u(1) |
| if( sps_sao_enabled_flag && !pps_sao_info_in_ph_flag) { | |
| **sh_sao_luma_used_flag** | u(1) |
| if( sps_chroma_format_idc != 0 ) | |
| **sh_sao_chroma_used_flag** | u(1) |
| } | |
| if( pps_deblocking_filter_override_enabled_flag && !pps_dbf_info_in_ph_flag ) | |
| **sh_deblocking_params_present_flag** | u(1) |
| if( sh_deblocking_params_present_flag ) { | |
| if( !pps_deblocking_filter_disabled_flag ) | |
| **sh_deblocking_filter_disabled_flag** | u(1) |
| if( !sh_deblocking_filter_disabled_flag ) { | |
| **sh_luma_beta_offset_div2** | se(v) |
| **sh_luma_tc_offset_div2** | se(v) |
| if( pps_chroma_tool_offsets_present_flag ) { | |
| **sh_cb_beta_offset_div2** | se(v) |
| **sh_cb_tc_offset_div2** | se(v) |
| **sh_cr_beta_offset_div2** | se(v) |
| **sh_cr_tc_offset_div2** | se(v) |
| } | |
| } | |
| } | |
| if( sps_dep_quant_enabled_flag *&&! nn_slice*) | |
| **sh_dep_quant_used_flag** | u(1) |
| if( sps_sign_data_hiding_enabled_flag && !sh_dep_quant_used_flag *&&! nn_slice*) | |
| **sh_sign_data_hiding_used_flag** | u(1) |
| if( sps_transform_skip_enabled_flag && !sh_dep_quant_used_flag && | |
| !sh_sign_data_hiding_used_flag *&&! nn_slice*) | |
| **sh_ts_residual_coding_disabled_flag** | u(1) |
| if( !sh_ts_residual_coding_disabled_flag && | |
| sps_ts_residual_coding_rice_present_in_sh_flag *&&! nn_slice*) | |
| **sh_ts_residual_coding_rice_idx_minus1** | u(3) |
| if( sps_reverse_last_sig_coeff_enabled_flag *&&! nn_slice*) | |
| **sh_reverse_last_sig_coeff_flag** | u(1) |
| if( pps_slice_header_extension_present_flag ) { | |
| **sh_slice_header_extension_length** | ue(v) |
| for( i = 0; i < sh_slice_header_extension_length; i++) | |
| **sh_slice_header_extension_data_byte**[ i ] | u(8) |
| } | |
| if( NumEntryPoints > 0 ) { | |
| **sh_entry_offset_len_minus1** | ue(v) |
| for( i = 0; i < NumEntryPoints; i++ ) | |
| **sh_entry_point_offset_minus1**[ i ] | u(v) |
| } | |
| byte_alignment( ) | |
| } | |

An example of the semantic is provided hereafter:
**sh_nn_flag** indicates the codec used to encode the slice. **sh_nn_flag** equal to 1 specifies that the current slice is encoded using a neural network-based method and that the payload contains a bitstream generated using an e2e codec. **sh_nn_flag** equal to 0 specifies that the current slice is not encoded using a neural network-based method and thus the payload contains data created by a traditional codec. When **ph_only_nn_slice** equals 1 and sh_slice_type = = I, **sh_nn_flag** should be considered to be set to 1.

In a variant, the syntax element indicating that an end-to-end codec is used may also be signalled at different level of a partition of a frame, for example in a tile or a coding tree unit header.

In another variant, the syntax element indicating that an end-to-end codec is used may also be signalled in further division of a coding tree unit, for example in a coding unit also referred to as block level.

In another variant, an indication that a slice is coded using an end-to-end codec may be encoded by specifying a new slice type **sh_slice_type** value. For instance, an indication (sh_slice_type = N) is signaled that a slice is coded using a new slice type corresponding to an end-to-end neural network coded intra slice. Thus, there may be two possible values for I frames: one for I-frame not encoded using end-to-end based codec and one for I-frame encoded using end-to-end based codec. In this variant, **sh_slice_type** specifies the coding type of the slice according to the following table. In that case, some tests on sh_slice_type == I would be replaced by sh_slice_type == I ∥ sh_slice_type == N.

### Table - Name association to sh_slice_type

**Table 4: an example of name association to sh_slice_type**

| **sh_slice_type** | **Name of sh_slice_type** |
|---|---|
| 0 | B (B slice) |
| 1 | P (P slice) |
| 2 | I (I slice, *not end-to-end codec*) |
| *3* | *N (I slice. end-to-end codec)* |

To facilitate reading in the above table 3, we define a variable **nn_slice** that is true if the slice is encoded using an e2e codec. In a final specification, it may be replaced by **sh_nn_flag or sh_slice_type == N.**

In yet other variants of the second embodiment, parts of the slice header may be disabled when **nn_slice** is 1. These elements include the alf syntax elements. As an example, this would lead to the following modification in slice header syntax table:

**Table 5: an example of E2E conditional slice header syntax**

| | |
|---|---|
| if( sps_alf_enabled_flag && !pps_alf_info_in_ph_flag *&&! nn_slice*) *{* | |

In some variants, an indication that a slice is coded using an end-to-end codec may be encoded by specifying a new **nal_unit_type.** For instance, a new type (**nal_unit_type** = 4) could be used to signal that a slice is coded using an end-to-end neural network coded intra slice. This could be advantageously useful to allow high level system modules to perform specific action on that slice (for example using a neural network accelerator hardware to decode it).

For instance, an example of a new NAL type, corresponding to table entry 4 as non-limiting value, may be described as in the modified NAL unit table below:

**Table 6: an example of NAL unit type table**

| **nal_unit_type** | **Name of nal_unit_type** | **Content of NAL unit and RBSP syntax structure** | **NAL unit type class** |
|---|---|---|---|
| 0 | TRAIL_NUT | Coded slice of a trailing picture or subpicture* | VCL |
| | | slice_layer_rbsp( ) | |
| 1 | STSA_NUT | Coded slice of an STSA picture or subpicture* | VCL |
| | | slice_layer_rbsp( ) | |
| 2 | RADL_NUT | Coded slice of a RADL picture or subpicture* | VCL |
| | | slice_layer_rbsp( ) | |
| 3 | RASL_NUT | Coded slice of a RASL picture or subpicture* | VCL |
| | | slice_layer_rbsp( ) | |
| *4* | *NN_NUT* | *Coded slice of a neural network coded picture or subpicture** | *VCL* |
| | | *slice_layer_rbsp( )* | |
| 5..6 | RSV_VCL_5.. RSV_VCL_6 | Reserved non-IRAP VCL NAL unit types | VCL |
| 7 | IDR_W_RADL | Coded slice of an IDR picture or subpicture* | VCL |
| 8 | IDR_N_LP | slice_layer_rbsp( ) | |
| 9 | CRA_NUT | Coded slice of a CRA picture or subpicture* | VCL |
| | | slice_layer_rbsp( ) | |
| 10 | GDR_NUT | Coded slice of a GDR picture or subpicture* | VCL |
| | | slice_layer_rbsp( ) | |
| 11 | RSV_IRAP_11 | Reserved IRAP VCL NAL unit type | VCL |
| 12 | OPI_NUT | Operating point information | non-VCL |
| | | operating_point_information_rbsp( ) | |
| 13 | DCI_NUT | Decoding capability information | non-VCL |
| | | decoding_capability_information_rbsp( ) | |
| 14 | VPS_NUT | Video parameter set | non-VCL |
| | | video_parameter_set_rbsp( ) | |
| 15 | SPS_NUT | Sequence parameter set | non-VCL |
| | | seq_parameter_set_rbsp( ) | |
| 16 | PPS_NUT | Picture parameter set | non-VCL |
| | | pic_parameter_set_rbsp( ) | |
| 17 | PREFIX_APS_NUT | Adaptation parameter set | non-VCL |
| 18 | SUFFIX_APS_NUT | adaptation_parameter_set_rbsp( ) | |
| 19 | PH_NUT | Picture header | non-VCL |
| | | picture_header_rbsp( ) | |
| 20 | AUD_NUT | AU delimiter | non-VCL |
| | | access_unit_delimiter_rbsp( ) | |
| 21 | EOS_NUT | End of sequence | non-VCL |
| | | end_of_seq_rbsp( ) | |
| 22 | EOB_NUT | End of bitstream | non-VCL |
| | | end_of_bitstream_rbsp( ) | |
| 23 | PREFIX_SEI_NUT | Supplemental enhancement information | non-VCL |
| 24 | SUFFIX_SEI_NUT | sei_rbsp( ) | |
| 25 | FD_NUT | Filler data | non-VCL |
| | | filler_data_rbsp( ) | |
| 26 | RSV_NVCL_26 | Reserved non-VCL NAL unit types | non-VCL |
| 27 | RSV_NVCL_27 | | |
| 28..31 | UNSPEC_29.. UNSPEC_31 | Unspecified non-VCL NAL unit types | non-VCL |
| * indicates a property of a picture when pps_mixed_nalu_types_in_pic_flag is equal to 0 and a property of the subpicture when pps_mixed_nalu_types_in_pic_flag is equal to 1. | | | |

According to a third embodiment, the bitstream may be modified at the level of the slice layer to include encoded data, namely video data corresponding to the current frame either encoded by traditional codec or encoded by auto-encoder. This element corresponds to the third element that is being made available to the decoder for reconstructing a picture of a video comprising at least one part of a picture being end-to-end coded using a neural network. For instance, we propose modifying the bitstream at the level of the slice layer, based on the nn_slice value to provide the encoded bitstream of a picture slice to the decoder.

**Table 7: an example of E2E conditional slice header syntax for slice data**

| |
|---|
| slice_layer_rbsp( ) { |
| slice_header( ) |
| *if (**nn_slice)*** |
| *nn_slice_data()* |
| *else* |
| slice_data( ) |
| rbsp_slice_trailing_bits( ) |
| } |

nn_slice_data() is a payload containing the data allowing the e2e codec to decode the frame. The exact method to use these bytes depends on the codec used. The payload will typically contain the bytes generated by using an entropy coder to code the intermediate features of an auto-encoder.

In some variants, for example when a syntax element indicating that an end-to-end codec is used may also be defined and signalled in another division of a frame, e.g. in a tile or a coding tree unit header or a coding unit (a coding block), the data payload may be divided between traditional codec data and e2e codec data at the level of said division.

According to a fourth embodiment of the syntax elements, one or more parameters allowing to determine the end-to-end codec at the decoder are signaled. This element corresponds to the second element that is being made available to the decoder for reconstructing a picture of a video comprising at least one part of a picture being end-to-end coded using a neural network Indeed, the decoder needs to know which e2e codec was used to encode the frame, the slice or the other partition of the signal. Several embodiments are possible. This piece of information may have been transmitted by another part of the system. It may have been transmitted at the SPS level. It may also be signalled as a tag URI with syntax and semantics as specified in IETF RFC 4151. In that case, the tag URI may for example be included in the picture header or the slice header. This piece of information may also be signalled in a new NAL syntax type, which requires a new NAL type as described below. Part of the information signalled about the e2e codec includes a description of the neural network used. An example of syntax for this element below as well.

According to a variant of the fourth embodiment, a new NAL Type NN_NUT describing the end-to-end neural network may be defined. The decoder is thus informed on which end-to-end network was used to encode the frame. For instance, an example of a new NAL type, corresponding to table entry 28 as non-limiting value, may be described as in the modified NAL unit table below:

**Table 8: another example of NAL unit type table**

| **nal_unit_type** | **Name of nal_unit_type** | **Content of NAL unit and RBSP syntax structure** | **NAL unit type class** |
|---|---|---|---|
| 0 | TRAIL_NUT | Coded slice of a trailing picture or subpicture* | VCL |
| | | slice_layer_rbsp( ) | |
| 1 | STSA_NUT | Coded slice of an STSA picture or subpicture* | VCL |
| | | slice_layer_rbsp( ) | |
| 2 | RADL_NUT | Coded slice of a RADL picture or subpicture* | VCL |
| | | slice_layer_rbsp( ) | |
| 3 | RASL_NUT | Coded slice of a RASL picture or subpicture* | VCL |
| | | slice_layer_rbsp( ) | |
| 4..6 | RSV_VCL_4.. RSV_VCL_6 | Reserved non-IRAP VCL NAL unit types | VCL |
| 7 | IDR_W_RADL | Coded slice of an IDR picture or subpicture* | VCL |
| 8 | IDR_N_LP | slice_layer_rbsp( ) | |
| 9 | CRA_NUT | Coded slice of a CRA picture or subpicture* | VCL |
| | | slice_layer_rbsp( ) | |
| 10 | GDR_NUT | Coded slice of a GDR picture or subpicture* | VCL |
| | | slice_layer_rbsp( ) | |
| 11 | RSV_IRAP_11 | Reserved IRAP VCL NAL unit type | VCL |
| 12 | OPI_NUT | Operating point information | non-VCL |
| | | operating_point_information_rbsp( ) | |
| 13 | DCI_NUT | Decoding capability information | non-VCL |
| | | decoding_capability_information_rbsp( ) | |
| 14 | VPS_NUT | Video parameter set | non-VCL |
| | | video_parameter_set_rbsp( ) | |
| 15 | SPS_NUT | Sequence parameter set | non-VCL |
| | | seq_parameter_set_rbsp( ) | |
| 16 | PPS_NUT | Picture parameter set | non-VCL |
| | | pic_parameter_set_rbsp( ) | |
| 17 | PREFIX_APS_NUT | Adaptation parameter set | non-VCL |
| 18 | SUFFIX_APS_NUT | adaptation_parameter_set_rbsp( ) | |
| 19 | PH_NUT | Picture header | non-VCL |
| | | picture_header_rbsp( ) | |
| 20 | AUD_NUT | AU delimiter | non-VCL |
| | | access_unit_delimiter_rbsp( ) | |
| 21 | EOS_NUT | End of sequence | non-VCL |
| | | end_of_seq_rbsp( ) | |
| 22 | EOB_NUT | End of bitstream | non-VCL |
| | | end_of_bitstream_rbsp( ) | |
| 23 | PREFIX_SEI_NUT | Supplemental enhancement information | non-VCL |
| 24 | SUFFIX_SEI_NUT | sei_rbsp( ) | |
| 25 | FD_NUT | Filler data | non-VCL |
| | | filler_data_rbsp( ) | |
| 26 | RSV_NVCL_26 | Reserved non-VCL NAL unit types | non-VCL |
| 27 | RSV_NVCL_27 | | |
| 28 | *NN_NUT* | *End-to-end codec description nn_network_rbsp()* | *non- VCL* |
| 29..31 | UNSPEC_29.. UNSPEC_31 | Unspecified non-VCL NAL unit types | non-VCL |
| * indicates a property of a picture when pps_mixed_nalu_types_in_pic_flag is equal to 0 and a property of the subpicture when pps_mixed_nalu_types_in_pic_flag is equal to 1. | | | |

When nal_unit_type is equal to "NN_NUT", a neural network is provided in the bitstream. According to a variant, the description of the codec may be included in another nal unit rather than creating a new one. For example, it may be included in a picture header or in a slice header.

According to yet another variant of the fourth embodiment related to encoding the neural network itself, an element may indicate how the neural network is signaled or encoded in the bitstream. It may for example be a value associated to a specific format such as NNC or Open Neural Network Exchange format and/or a particular version of a format.

According to a variant, a data structure related to the configuration of the neural network inference engine is defined. The data structure may for example include indications on the precision to use for the operations, the memory necessary to store the network or the inference engine to use.

Table 9 provides an example of syntax describing the network to be used to decode the frame:

**Table 9: an example of data structure describing the end-to-end neural network**

| | |
|---|---|
| nn_network_rbsp( payloadSize ) { | **Descriptor** |
| **nn_mode_idc** | ue(v) |
| if( nn_mode_idc = = 1) { | |
| **nn_tag_uri** | u(8) |
| **nn_uri** | st(v) |
| } | |
| **nn_complexity_info_present_flag** | ue(v) |
| if( nn_complexity_info_present_flag ) { | |
| **nn_parameter_type_idc** | u(2) |
| if( nn_parameter_type_idc != 2 ) | |
| **nn_log2_parameter_bit_length_minus3** | u(2) |
| **nn_num_parameters_idc** | u(6) |
| **nn_num_mac_operations_idc** | ue(v) |
| **nn_total_kilobyte_size** | ue(v) |
| } | |
| if( nn_mode_idc == 0 ) { | |
| /* ISO/IEC 15938-17 bitstream */ | |
| while( !byte_aligned( ) ) | |
| **nn_reserved_zero_bit_b** | u(1) |
| for( i = 0; more_data_in_payload( ); i++ ) | |
| **nn_payload_byte[i]** | b(8) |
| } | |
| } | |

**nn_mode_idc** indicates the format used to encode the Neural network. A value equals to 0 indicates that this SEI message contains an ISO/IEC 15938-17 bitstream. A value of 1 indicates that this SEI message contains a neural network encoded by a format identified by the tag URI nn_tag_uri.
**nn_tag_uri** contains a tag URI with syntax and semantics as specified in IETF RFC 4151 identifying the format and associated information about the network or an update encoded here.
**nn_uri** contains a URI with syntax and semantics as specified in IETF Internet Standard 66 identifying the neural network used as a network or an update relative to the network.
**nn_complexity_info_present_flag** equal to 1 specifies that one or more syntax elements that indicate the complexity of the network are present. nn_complexity_info_present_flag equal to 0 specifies that no syntax elements that indicates the complexity of the network are present.
**nn_parameter_type_idc** equal to 0 indicates that the neural network uses only integer parameters. nn_parameter_type_flag equal to 1 indicates that the neural network may use floating point or integer parameters. nn_parameter_type_idc equal to 2 indicates that the neural network uses only binary parameters. nn_parameter_type_idc equal to 3 is reserved for future use.
**nn_log2_parameter_bit_length_minus3** equal to 0, 1, 2, and 3 indicates that the neural network does not use parameters of bit length greater than 8, 16, 32, and 64, respectively. When nn_parameter_type_idc is present and nn_log2_parameter_bit_length_minus3 is not present the neural network does not use parameters of bit length greater than 1.
**nn_num_parameters_idc** indicates the maximum number of neural network parameters for the network in units of a power of 2 (or another power of 2). nn_num_parameters_ide equal to 0 indicates that the maximum number of neural network parameters is unknown. The value nn_num_parameters_idc shall be in the range of 0 to 63, inclusive.

If the value of nn_num_parameters_ide is greater than zero, the variable maxNumParameters is derived as follows: $maxNumParameters = \left(2≪nn_num_parameters_idc\right) - 1$

The number of neural network parameters of the post-processing filter shall be less than or equal to maxNumParameters.
**nn_num_mac_operations_idc** greater than 0 indicates that the maximum number of multiply-accumulate operations per inference of network is less than or equal to nn_num_mac_operations_idc. nn_num_mac_operations_idc equal to 0 indicates that the maximum number of multiply-accumulate operations of the network is unknown. The value of nn_num_mac_operations_idc shall be in the range of 0 to 2³² - 1, inclusive.
**nn_total_kilobyte_size** greater than 0 indicates a total size in kilobytes required to store the uncompressed parameters for the neural network. The total size in bits is a number equal to or greater than the sum of bits used to store each parameter. nn_total_kilobyte_size is the total size in bits divided by 8000, rounded up. nn_total_kilobyte_size equal to 0 indicates that the total size required to store the parameters for the neural network is unknown. The value of nn_total_kilobyte_size shall be in the range of 0 to 2³² - 1, inclusive.
**nn_reserved_zero_bit_b** shall be equal to 0 in bitstreams conforming to this edition of this document. Decoders shall ignore SEI messages in which nn_reserved_zero_bit_b is not equal to 0.
**nn_payload_byte[i]** contains the i-th byte of a bitstream conforming to ISO/IEC 15938-17. The byte sequence nn_payload_byte[i] for all present values of i shall be a complete bitstream that conforms to ISO/IEC 15938-17.

According to an embodiment, the data structure describing the end-to-end neural network may comprises at least one of a model type of the neural network, a type of computation of the neural network, a format of an encoding of the neural network, an indication of a tag URI identifying a format of the neural network, an indication of a URI identifying the neural network, an indicator indicating whether complexity information relating to the neural network is present or not, an indication of a type of parameters used by the neural network, an indication relating to a bit length of parameters used by the neural network, an indicator indicating a maximum number of parameters for the neural network, an indication of a maximum number of multiply-accumulate operations per inference of the neural network, or an indication of a size for storing uncompressed parameters of the neural network.

### Feature(s) associated with decoding are provided herein.

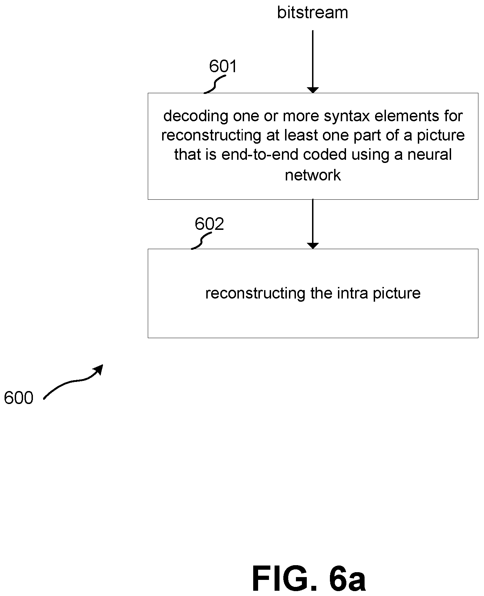

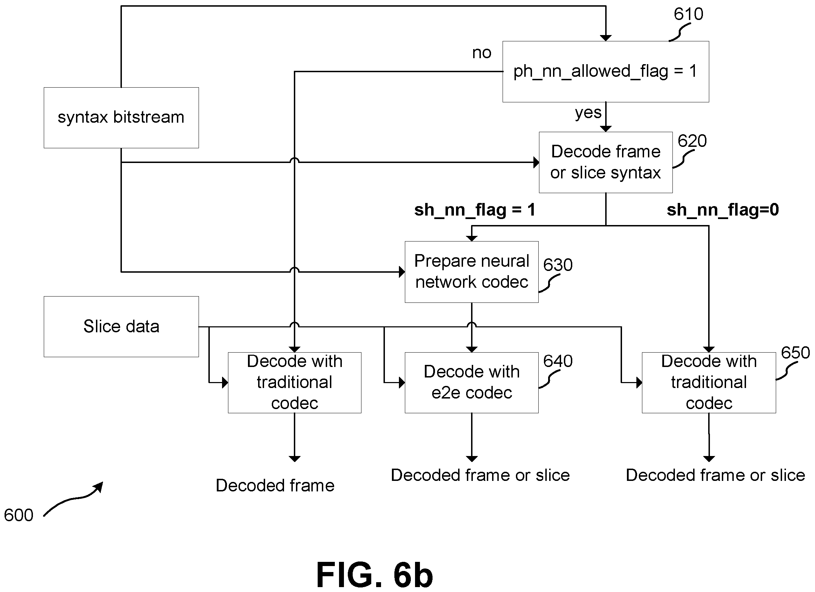

FIG. 6a and FIG. 6b are block diagrams illustrating a decoding method according to one or more embodiments of the present disclosure. FIG. 6a and FIG. 6b may represent a same decoding method 600 from a different perspective, the decoding method 600 is compliant with any of the variants of the syntax proposed previously.

For instance, in the embodiment of FIG 6a, a bitstream is received that comprises the three pieces of information previously described for reconstructing a picture of a video comprising at least one part of an intra picture being end-to-end coded using a neural network. In a step 601, the one or more syntax elements are decoded for reconstructing at least one part of an intra picture end-to-end coded using a neural network. In a step 602, the intra picture of a video is decoded using the one or more syntax elements, wherein at least one part of the intra picture is reconstructed using a neural network. In a step, not shown on FIG. 6a, the neural network may be reconstructed in the decoder according to information for instance signaled in a data structure.

FIG. 6b illustrates a more detailed embodiment of the decoding method. For instance, frames may be processed one by one. For each frame (or picture) to decode, the bitstream is processed as follows. In a step 610, the frame or slice type is checked. If the frame or slice is not an I-frame or I-slice (no), the decoder decodes the frame or slice with the traditional codec. If the frame or slice is an I-frame and end-to-end neural network coding for at least a part of the picture is enabled (ph_nn_allowed_flag = 1), then in a step 620, the one or more syntax elements related to reconstructing at least one part of an Intra picture end-to-end coded using a neural network are retrieved form the bitstream and decoded. As previously described, the syntax elements may be signaled as bitstream syntax at various level including picture header, slice header, coding tree header. The step 620 may comprise parsing the indication (sh_nn_flag) enabling end-to-end neural network coding at a given level of the picture, for instance slice level. According to different variant, syntax element may include whether the frame or slice is encoded by the traditional codec or an e2e one (nn_slice, sh_nn_flag and/or ph_only_nn_slice as described above). In case a current slice is end-to-end neural network coded (sh_nn_flag = 1), additional information describing the e2e codec may be decoded from the bitstream as well, such as the particular codec used. In case a current slice is coded using the traditional codec (e.g. nn_slice=0, or sh_nn_flag=0, or ph_nn_allowed_flag=0), the frame bitstream is processed 650 by the decoder of a traditional codec to reconstruct the frame. In case a current slice is coded using an e2e codec (e.g. nn_slice=1, sh_nn_flag=1 and/or ph_only_nn_slice=1), the corresponding neural network may be prepared for decoding in step 630. This may involve decoding the parameters or weights of the network from the bitstream or loading them from memory. It may also involve initializing the network in an appropriate computing resource which may be a neural network accelerator chip. Then in a step 640, the slice data in the bitstream is processed by the e2e codec decoder to reconstruct the current slice or more generally the part of the picture corresponding to the given level using the neural network. Multiple decoded slices issued from traditional codec 650 or for e2e codec may be combined to form a decoded picture. As such, the frame is decoded from the bitstream by the codec selected by the encoder.

### Feature(s) associated with generalization to other neural network-based approaches are provided herein.

To illustrate the application of the present principles to other neural network-based approaches, we discuss how the above-described approach can be modified to apply to apply to or include INR-based approaches. The syntax elements introduced to indicate that a frame, a slice or another part of a picture is encoded using a neural based approach can be used as they are. These elements are for example ph_only_nn_slice, ph_nn_allowed_flag, ph_nn_allowed_flag, sh_nn_flag, nn_slice. The slice_header, picture_header or nn_network_rbsp may be modified to include a syntax element describing the type of codec used (e.g. auto-encoder or INR) if more than one type is possible.

Alternatively, some or all the syntax elements introduced to indicate that a frame, a slice or another part of a picture is encoded using a neural based approach may be duplicated so that one set of syntax elements that indicate the presence or absence of an auto-encoder based codec and the presence or absence of an INR-based codec.

Alternatively, the syntax elements introduced to indicate that a frame, a slice or another part of a picture is encoded using a neural based approach may be modified from a boolean to an unsigned integer, with 0 meaning no neural network-based codec is or may be used, 1 indicating the element applies to auto-encoder based codec, 2 indicating the element applies to INR-based codecs, 3 indicating it applies to both.

Alternatively, additional syntax elements may be introduced to explicitly list whether each codec is concerned by the flag.

If an INR-based codec is used for a slice, *nn_slice_data()* will contain data describing the INR model. As an example, this may include all or some elements of the syntax proposed in the European patent application 24306011.8 filed on June, 25, 2024 by the same applicant or in the European Patent Application 23305937.7 filed on June, 13, 2023 by the same applicant. Some of these elements that describe properties of the model rather than quantized weight or latent value payloads could also be included in the slice header, picture header or new NAL type.

One or more embodiments provide a computer program comprising instructions which when executed by one or more processors cause such processors to perform the encoding and/or decoding methods according to any of the embodiments described above. One or more embodiments also provide a computer readable storage medium having stored thereon instructions for encoding or decoding video data according to the methods described above.

One or more embodiments provide a computer readable storage medium having stored thereon video data generated according to the methods described above. One or more embodiments also provide a method and apparatus for transmitting or receiving video data generated according to the methods described above.

The embodiments described herein may be implemented in, for example, a method or a process, an apparatus, a software program, a data stream, or a signal. Even if only discussed in the context of a single form of implementation (e.g., as a method), the implementation of such features may also be implemented in other forms. An apparatus may be implemented in, for example, appropriate hardware, software, and firmware. Corresponding methods may be implemented in, for example, a processor.

Various methods and aspects described herein can be used to modify one or more modules. For example, the intra predictors and inter predictors described with respect to FIGs. 2 and 3 may be implemented as one or more modules and modified according to the various embodiments of the present disclosure.

The various embodiments described herein provide at least the following features, devices or aspects, alone or on any combination, across various claim categories and types:
i. Encoding, into coded video data, syntax elements that can enable the decoder to decode the coded video data, according to any of the embodiments described herein.
ii. A bitstream that includes one or more of the described syntax elements, or variations thereof, whether transmitted, stored, or otherwise made available.
iii. Creating, transmitting, receiving, and/or decoding of the bitstream.
iv. An electronic device (e.g., TV, set-top box, mobile phone, tablet, etc.) that tunes a channel to receive a bitstream or that receives such bitstream over the air. The electronic device decodes the syntax elements from the bitstream, and, optionally, displays (e.g., via a monitor or other type of display) a resulting image.

Various numeric values are used in the present application. Such specific values are for example purposes and the embodiments described are not limited to these specific values.

Various methods are described herein, and such methods comprise one or more steps or actions for achieving the described method. Unless a specific order of steps or actions is required for the proper operation of the method, the order and/or use of specific steps and/or actions may be modified or combined. Additionally, terms such as "first", "second", etc. may be used in various embodiments to modify an element, component, step, operation, etc., for example, a "first decoding" and a "second decoding". Use of such terms does not imply an order to the operations unless specifically required.

The present disclosure may refer to "determining" various pieces of information. Determining information may include one or more of, for example, estimating, calculating, predicting, or retrieving (e.g., from memory) the information.

The present disclosure may refer to "accessing" various pieces of information. Accessing information may include one or more of, for example, receiving, retrieving (e.g., from memory), storing, moving, copying, calculating, determining, predicting, or estimating the information. Similarly, the present disclosure may refer to "receiving" various pieces of information. Receiving information may include one or more of, for example, accessing or retrieving (e.g., from memory) the information.

"Decoding," as used herein, encompasses all or part of the processes performed, for example, on an encoded sequence to produce an output suitable for display. In some embodiments, such processes include one or more of the processes typically performed by a decoder, for example, entropy decoding, inverse quantization, etc. Whether the phrase "decoding process" is intended to refer to a subset of operations or generally to the broader decoding process will be clear based on the context of the specific description and will be well understood by those skilled in the art.

"Encoding," as used herein, encompasses all or part of the processes performed, for example, on input video data an order to produce an encoded bitstream. Additionally, the terms "reconstructed" and "decoded" may be used interchangeably, the terms "encoded" or "coded" may be used interchangeably, the terms "image," "picture," "sub-picture," "slice," and "frame" may be used interchangeably, and the terms "pixel" and "sample" may be used interchangeably.

The present disclosure refers to information, for example, syntax elements, that can be transmitted or stored. Such information can be packaged or arranged in a variety of manners, including for example manners common in video standards such as putting the information into a sequence parameter set (SPS), a picture parameter set (PPS), a network abstraction layer (NAL) unit, a header (for example, a NAL unit header, or a slice header), or an SEI message. Other manners are also available, including, for example, manners that are common for system level or application-level standards such as signaling the information into one or more of the following:
i. session description protocol (SDP), for example as described in RFCs and/or used in conjunction with real-time transport protocol (RTP) transmission.
ii. hypertext transfer protocol (HTTP) live Streaming (HLS) manifest transmitted over HTTP.
iii. dynamic adaptive streaming over HTTP (DASH) media presentation description (MPD) descriptors, for example as used in DASH and transmitted over HTTP.
iv. RTP header extensions, for example as used during RTP streaming.
v. International Organization for Standardization (ISO) base media file format, for example, as used in Omnidirectional MediA Format (OMAF).

As used herein, "signal" and "signaling" refer to, among other things, indicating information to a decoder. For example, in some embodiments the encoder signals a quantization matrix for de-quantization, whereby the same parameter is used for both encoding and decoding. In some embodiments, the signaling may be explicit, such that information (e.g., a particular parameter) is transmitted to the decoder enabling the decoder to use the same particular parameter. In some embodiments, the signaling may be implicit, in that the information (e.g., a particular parameter) is indicated based on other information at or transmitted to the decoder or derived or selected by the decoder based on information available at the decoder. By not transmitting the information (e.g., the particular parameter), a bit savings is thus realized in some embodiments. In some embodiments, one or more syntax elements or flags are used to signal information to a decoder. While the preceding relates to the verb form of the word "signal", the word "signal" can also be used herein as a noun.

In some embodiments, signals may be produced that are formatted to carry information that may be stored or transmitted. Such information may include, for example, instructions for performing a method, or data produced by one of the described implementations (e.g., a bitstream of a described embodiment). Such a signal may be formatted, for example, as an electromagnetic wave or as a baseband signal. The formatting may include, for example, encoding a data stream and modulating a carrier with the encoded data stream. The information that the signal carries may be, for example, analog or digital information. The signal may be transmitted over a variety of different wired or wireless links and may be stored on a processor-readable medium.

It is to be understood that use of any of the following "/", "and/or", and "at least one of" is intended to encompass all possible selections of listed items, taken either individually or in any combination thereof.

While specific embodiments have been described in the foregoing description in connection with the accompanying drawings, it should be understood that embodiments described herein are examples only and should not be taken as limiting the scope of the present disclosure or the following claims. Although features and elements are described herein in particular combinations, those of ordinary skill in the art will appreciate that such features or elements may be used alone or in any combination with the other features and elements. It is understood, therefore, that the overall teachings of the present disclosure are not limited to the particular embodiments, implementations, and examples disclosed herein, but are intended to cover variations, modifications, and alternatives as defined by the appended claims and any and all equivalents thereof.

## Claims

1. A method, comprising
encoding a picture of a video, wherein at least one part of the picture is end-to-end coded using a neural network;
encoding one or more syntax elements for reconstructing the at least one part of the picture end-to-end coded using a neural network; and
generating a bitstream comprising the coded picture, the one or more syntax elements for reconstructing the at least one part of the picture end-to-end coded using the neural network.

2. An apparatus, comprising one or more processors, wherein said one or more processors is operable to:
encode a picture of a video, wherein at least one part of the picture is end-to-end coded using a neural network;
encode one or more syntax elements for reconstructing the at least one part of the picture end-to-end coded using a neural network; and
generate a bitstream comprising the coded picture, the one or more syntax elements for reconstructing the at least one part of the picture end-to-end coded using the neural network.

3. A method, comprising
decoding one or more syntax elements for reconstructing at least one part of a picture end-to-end coded using a neural network; and
reconstructing the picture of a video using the one or more syntax elements, wherein at least one part of the picture is reconstructed using a neural network.

4. An apparatus, comprising one or more processors, wherein said one or more processors is operable to decode one or more syntax elements:
decode one or more syntax elements for reconstructing at least one part of a picture end-to-end coded using a neural network; and
reconstruct the picture of a video using the one or more syntax elements, wherein at least one part of the picture is reconstructed using a neural network.

5. The method of any of claims 1 or 3, or the apparatus of any of claims 2 or 4, wherein the one or more syntax elements comprise at least one of:
an indication(ph_nn_allowed_flag) enabling end-to-end neural network coding for at least a part of the picture;
an indication specifying (ph_only_nn_slice) that all parts of the picture are end-to-end neural network coded.

6. The method of any one of claims 1, 3 or 5, or the apparatus of any one of claims 2, 4-5, wherein the one or more syntax elements are signaled in one of a picture header, a slice header, a coding tree unit header.

7. The method of any one of claims 1, 3 or 5-6, or the apparatus of any one of claims 2, 4-6, wherein at least one part of the picture header is conditionally disabled when the indication specifies (ph_only_nn_slice) that all parts of the picture are end-to-end neural network coded.

8. The method of any one of claims 1, 3 or 5-7, or the apparatus of any one of claims 2, 4-7, wherein the one or more syntax elements further comprise an indication (sh_nn_flag) enabling end-to-end neural network coding at a given level of the picture, the given level comprises a slice level, a coding tree level, a block level.

9. The method of any one of claims 1, 3 or 5-7, or the apparatus of any one of claims 2, 4-7, an indication (sh_slice_type = N) that a slice is coded using a new slice type corresponding to an end-to-end neural network coded Intra slice.

10. The method of any one of claims 1, 3 or 5-7, or the apparatus of any one of claims 2, 4-7, further comprising a new NAL Type related to a data structure describing the end-to-end neural network.

11. The method or the apparatus of claim 10, wherein the data structure describing the end-to-end neural network comprises at least one of:
a model type of the neural network,
a type of computation of the neural network,
a format of an encoding of the neural network,
an indication of a tag URI identifying a format of the neural network,
an indication of a URI identifying the neural network,
an indicator indicating whether complexity information relating to the neural network is present or not,
an indication of a type of parameters used by the neural network,
an indication relating to a bit length of parameters used by the neural network,
an indicator indicating a maximum number of parameters for the neural network,
an indication of a maximum number of multiply-accumulate operations per inference of the neural network, or
an indication of a size for storing uncompressed parameters of the neural network.

12. The method of any of claims 3, 5 and 7 or the apparatus of any of claims 4, 5 and 7, wherein reconstructing the picture of the video using the one or more syntax elements and the neural network further comprises:
when the indication (ph_nn_allowed_flag) enables end-to-end neural network coding for at least a part of the picture, parsing the indication (sh_nn_flag) enabling end-to-end neural network coding at the given level of the picture; and
when the indication (sh_nn_flag) enables end-to-end neural network coding at the given level of the picture, reconstructing the at least a part of the picture corresponding to the given level using the neural network; and
when the indication (sh_nn_flag) disables end-to-end neural network coding at the given level of the picture, reconstructing the at least a part of the picture corresponding to the given level using a standard decoder.

13. A bitstream comprising data representative of a coded picture of a video, wherein at least one part of the picture is end-to-end coded using a neural network and data representative of one or more syntax elements for reconstructing the at least one part of the picture end-to-end coded using a neural network

14. The bitstream of claim 13, wherein the one or more syntax elements comprise at least one of:
an indication (ph_nn_allowed_flag) enabling end-to-end neural network coding for at least a part of the picture;
an indication specifying (ph_only_nn_slice) that all parts of the picture are end-to-end neural network coded.

15. The bitstream of claim 13, further comprising data representative of a data structure describing the end-to-end neural network, wherein the data structure describing the end-to-end neural network comprises at least one of:
a model type of the neural network,
a type of computation of the neural network,
a format of an encoding of the neural network,
an indication of a tag URI identifying a format of the neural network,
an indication of a URI identifying the neural network,
an indicator indicating whether complexity information relating to the neural network is present or not,
an indication of a type of parameters used by the neural network,
an indication relating to a bit length of parameters used by the neural network,
an indicator indicating a maximum number of parameters for the neural network,
an indication of a maximum number of multiply-accumulate operations per inference of the neural network, or
an indication of a size for storing uncompressed parameters of the neural network.
